# EUROPEAN PATENT APPLICATION

(11) **EP 4 366 350 A1**
(43) Date of publication of application: **08.05.2024**
(21) Application number: 23206475.8
(22) Date of filing: 27.10.2023
(51) Int. Cl.: H04W 8/24, H04W 56/00

(54) **METHOD AND APPARATUS FOR CAPABILITY REPORTING TO SUPPORT SMALL DATA TRANSMISSION ON A BANDWIDTH PART WITH NON-CELL-DEFINING SYNCHRONIZATION SIGNAL BLOCK**

(30) Priority: 07.11.2022 US 202263382539 P; 09.11.2022 US 202263382893 P; 27.09.2023 US 202318373901
(71) Applicant: MediaTek Inc., 30078 Hsinchu City (TW)
(72) Inventor: TSAI, Chiou-Wei, Hsinchu City (TW)
(74) Representative: Patentship Patentanwaltsgesellschaft mbH

(57) **Abstract**

Various solutions for capability reporting to support small data transmission (SDT) on a bandwidth part (BWP) for user equipment (UE) are described. An apparatus (410) may transmit UE capability information to a wireless node (420) of a wireless network. The UE capability information may indicate that the apparatus (410) supports using a BWP with a condition of synchronization signal block (SSB) association for SDT. The apparatus (410) may also receive a configuration associated with the BWP for SDT from the wireless node (420). The configuration may be configured based on the UE capability information. The apparatus (410) may further initiate an SDT procedure on the BWP according to the configuration.

## Description

### TECHNICAL FIELD

The present disclosure is generally related to mobile communications and, more particularly, to capability reporting to support small data transmission (SDT) on a bandwidth part (BWP) with non-cell-defining synchronization signal block (NCD-SSB) for user equipment (UE) (e.g., reduced capability (RedCap) UE and/or non-RedCap UE).

### BACKGROUND

Unless otherwise indicated herein, approaches described in this section are not prior art to the claims listed below and are not admitted as prior art by inclusion in this section.

In the 3^{rd} Generation Partnership Project (3GPP) Release 17, a new type of UEs called RedCap UEs (also known as NR-Light UEs) is introduced. Generally, the RedCap UEs are associated with lower communicative capacity when compared to typical UEs (or called non-RedCap UEs), such as high-end UEs supporting enhanced mobile broadband (eMBB) and/or ultra-reliable low latency communications (URLLC) services. For example, the RedCap UEs may be limited in terms of maximum bandwidth (e.g., 20 MHz in Frequency Range 1 (FR1), 100 MHz in FR2, etc.), maximum transmission power (e.g., 20 dBm, 14 dBm, etc.), number of receive antennas (e.g., 1 receive antenna, 2 receive antennas, etc.), and so on. The reduced complexity contributes to more cost-efficient NR-Light devices, longer battery life due to lower power consumption, and a smaller device footprint, which enables newer designs for a broad range of use cases, such as industrial sensors, video surveillance, and wearables.

To support coexistence of RedCap UEs and non-RedCap UEs, a separate downlink (DL) initial bandwidth part (iBWP) for RedCap UEs may be required, such that a common search space (CSS) and common control resource set (CORESET) may be configured on the separate DL iBWP for the RedCap UEs to perform physical downlink control channel (PDCCH) monitoring. However, in the current 5G New Radio (NR) framework, such BWP may not contain cell-defining-SSB (CD-SSB) and CORESET#0, and staying on a BWP without CD-SSB will be problematic to UE's DL synchronization and paging monitoring which are generally required during an SDT procedure. Specifically, during the SDT procedure, a UE needs to monitor a DL response from a base station (BS) after the initial transmission until a certain timer (e.g., cg-SDT-TimeAlignmentTimer, configuredGrantTimer, and/or T319a (i.e., SDT failure detection timer)) expires. That is, the UE may need to monitor PDCCH for the BS's response on the BWP without CD-SSB for a time duration up to 40960 milli-seconds long. Furthermore, the UE also needs to monitor paging search space for system information (SI) change indication or public warning system (PWS) notification during the SDT procedure, i.e., when the SDT timer is running, and the time duration of the SDT timer may be hundreds of milli-seconds long. As a result, staying in a BWP without SSB may cause the UE out-of-synchronization in DL reception and uplink (UL) timing accuracy.

Therefore, there is a need for a solution to supporting SDT for UE in a more efficient and flexible way in terms of time and resource utilization.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to propose solutions or schemes that address the aforementioned issues pertaining to supporting SDT for UE (e.g., RedCap UE and/or non-RedCap UE).

In a first aspect, a method may involve an apparatus transmitting UE capability information to a wireless node of a wireless network, wherein the UE capability information indicates that the apparatus supports using a BWP with a condition of SSB association for SDT. The method may also involve the apparatus receiving a configuration associated with the BWP for SDT from the wireless node, wherein the configuration is configured based on the UE capability information. The method may further involve the apparatus initiating an SDT procedure on the BWP according to the configuration.

In an embodiment of the first aspect, the condition of SSB association indicates that the BWP is associated with no cell-defining SSB (CD-SSB) or is associated with NCD-SSB, or wherein the configuration includes one or more non-cell-defining SSBs (NCD-SSBs) associated with the BWP for SDT. In an embodiment of the first aspect, the receiving of the configuration is performed in an event that the BWP comprises no CD-SSB, or wherein the BWP is a RedCap-specific BWP. In an embodiment of the first aspect, the initiating of the SDT procedure is performed in an event that the apparatus is operating in a radio resource control (RRC) inactive state, an RRC idle state or an RRC connected state. In an embodiment of the first aspect, the SDT procedure comprises a random access (RA)-SDT procedure or a configured grant (CG)-SDT procedure. In an embodiment of the first aspect, the configuration is received via an RRC Release message. In an embodiment of the first aspect, the method further comprises at least one of the following: maintaining, by the processor, timing advance (TA) alignment and TA timer validation for the SDT procedure based on the NCD-SSBs; performing, by the processor, a reference signal received power (RSRP) measurement based on the NCD-SSBs to determine whether to perform the SDT procedure; and performing, by the processor, an RSRP measurement based on the NCD-SSBs to determine which SSB to select for RA-SDT and CG-SDT.

In a second aspect, an apparatus may comprise a transceiver which, during operation, wirelessly communicates with a network node of a wireless network. The apparatus may also comprise a processor communicatively coupled to the transceiver. The processor, during operation, may perform operations comprising transmitting, via the transceiver, UE capability information to the wireless node, wherein the UE capability information indicates that the apparatus supports using a BWP with a condition of SSB association for SDT. The processor may also perform operations comprising receiving, via the transceiver, a configuration associated with the BWP for SDT from the wireless node, wherein the configuration is configured based on the UE capability information. The processor may further perform operations comprising initiating an SDT procedure on the BWP according to the configuration.

In an embodiment of the second aspect, the condition of SSB association indicates that the BWP is associated with no cell-defining SSB (CD-SSB) or is associated with NCD-SSB, or wherein the configuration includes one or more non-cell-defining SSBs (NCD-SSBs) associated with the BWP for SDT. In an embodiment of the second aspect, the receiving of the configuration is performed in an event that the BWP comprises no CD-SSB, or wherein the BWP is a RedCap-specific BWP. In an embodiment of the second aspect, the initiating of the SDT procedure is performed in an event that the apparatus is operating in a radio resource control (RRC) inactive state, an RRC idle state or an RRC connected state. In an embodiment of the second aspect, the SDT procedure comprises a random access (RA)-SDT procedure or a configured grant (CG)-SDT procedure. In an embodiment of the second aspect, the configuration is received via an RRC Release message. In an embodiment of the second aspect, during operation, the processor further performs operations comprising at least one of the following: maintaining timing advance (TA) alignment and TA timer validation for the SDT procedure based on the NCD-SSBs; performing, via the transceiver, a reference signal received power (RSRP) measurement based on the NCD-SSBs to determine whether to perform the SDT procedure; and performing, via the transceiver, an RSRP measurement based on the NCD-SSBs to determine which SSB to select for RA-SDT and CG-SDT.

In a third aspect, a method may involve a wireless node receiving UE capability information from an apparatus, wherein the UE capability information indicates that the apparatus supports using a BWP with a condition of SSB association for SDT. The method may also involve the wireless node transmitting a configuration associated with the BWP for SDT to the apparatus, wherein the configuration is configured based on the UE capability information. The method may further involve the wireless node performing an SDT procedure with the apparatus on the BWP, wherein the SDT procedure is initiated according to the configuration.

In an embodiment of the third aspect, the condition of SSB association indicates that the BWP is associated with no cell-defining SSB (CD-SSB) or is associated with NCD-SSB, or wherein the configuration includes one or more non-cell-defining SSBs (NCD-SSBs) associated with the BWP for SDT. In an embodiment of the third aspect, the transmitting of the configuration is performed in an event that the BWP comprises no cell-defining synchronization signal block (CD-SSB) , or wherein the BWP is a RedCap-specific BWP. In an embodiment of the third aspect, the SDT procedure is initiated in an event that the apparatus is operating in a radio resource control (RRC) inactive state, an RRC idle state or an RRC connected state. In an embodiment of the third aspect, the SDT procedure comprises a random access (RA)-SDT procedure or a configured grant (CG)-SDT procedure. In an embodiment of the third aspect, the configuration is transmitted via an RRC Release message.

It is noteworthy that, although description provided herein may be in the context of certain radio access technologies, networks and network topologies such as Long-Term Evolution (LTE), LTE-Advanced, LTE-Advanced Pro, 5th Generation (5G), New Radio (NR), Internet-of-Things (IoT) and Narrow Band Internet of Things (NB-IoT), Industrial Internet of Things (IIoT), beyond 5G (B5G), and 6th Generation (6G), the proposed concepts, schemes and any variation(s)/derivative(s) thereof may be implemented in, for and by other types of radio access technologies, networks and network topologies. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram depicting an example scenario of the time-frequency structure of an SSB in accordance with an implementation of the present disclosure.
FIG. 2 is a diagram depicting an example scenario of a UE capability transfer procedure in accordance with an implementation of the present disclosure.
FIG. 3 is a diagram depicting an example scenario of an SDT procedure in accordance with an implementation of the present disclosure.
FIG. 4 is a block diagram of an example communication system in accordance with an implementation of the present disclosure.
FIG. 5 is a flowchart of an example process in accordance with an implementation of the present disclosure.
FIG. 6 is a flowchart of another example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to capability reporting to support SDT on a BWP with NCD-SSB for UE. According to the present disclosure, a number of possible solutions may be implemented separately or jointly. That is, although these possible solutions may be described below separately, two or more of these possible solutions may be implemented in one combination or another.

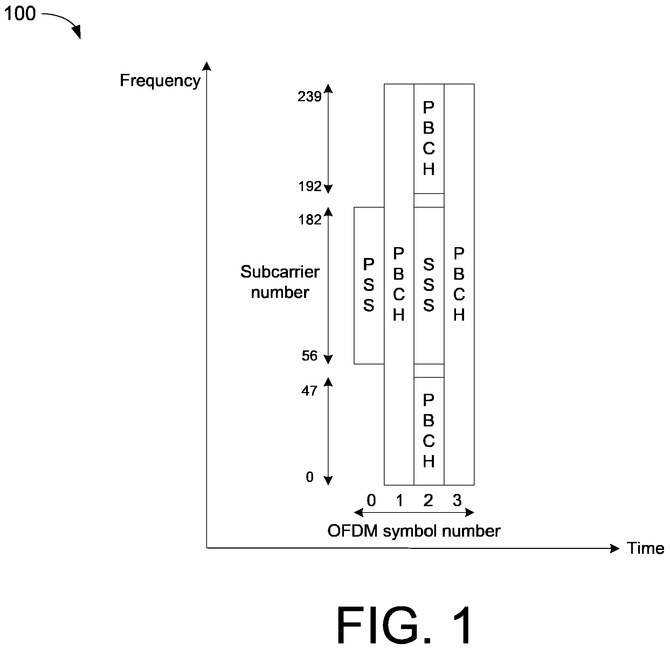

FIG. 1 illustrates an example scenario 100 of the time-frequency structure of an SSB in accordance with an implementation of the present disclosure. As shown in FIG. 1, a synchronization signal and physical broadcast channel (PBCH) block (SSB) may consist of primary and secondary synchronization signals (PSS, SSS), each occupying 1 symbol and 127 subcarriers, and PBCH spanning across 3 OFDM symbols and 240 subcarriers, but on one symbol leaving an unused part in the middle for SSS. The possible time locations of SSBs within a half-frame may be determined by sub-carrier spacing and the periodicity of the half-frames where SSBs are transmitted is configured by the network. During a half-frame, different SSBs may be transmitted in different spatial directions (i.e., using different beams, spanning the coverage area of a cell). Within the frequency span of a carrier, multiple SSBs may be transmitted. The physical cell identifiers (PCIs) of SSBs transmitted in different frequency locations do not have to be unique, i.e., different SSBs in the frequency domain may have different PCIs. In particular, when an SSB is associated with a remaining minimum SI (RMSI) (i.e., the system information block type 1 (SIB1)), the SSB is referred to as a CD-SSB. On the other hand, when an SSB is not associated with an RMSI, the SSB is referred to as an NCD-SSB.

In 3GPP Release 17, it was agreed that NCD-SSB may be configured to RRC_CONNECTED UEs (i.e., UEs in RRC_CONNECTED state) via dedicated DL BWP configuration. Furthermore, NCD-SSB is specifically configured to RRC_CONNECTED UEs for measurement purposes (e.g., serving cell measurement) only.

To support coexistence of RedCap UEs and non-RedCap UEs, a separate DL iBWP for RedCap UEs may be required, such that a CSS and CORESET may be configured on the separate DL iBWP for the RedCap UEs to perform PDCCH monitoring and/or SDT. However, in the current 5G NR framework, such BWP may not contain CD-SSB and CORESET#0, and staying on a BWP without CD-SSB will be problematic to UE's DL synchronization and paging monitoring which are required during an SDT procedure. Therefore, there is a need for a solution to supporting SDT for UE in a more efficient way in terms of time and resource utilization.

In view of the above, the present disclosure proposes a number of schemes pertaining to capability reporting to support SDT on a BWP with NCD-SSB for UE. According to the schemes of the present disclosure, UE capability information indicating that the UE supports using a BWP with no CD-SSB or with NCD-SSB is reported to a wireless network (e.g., an LTE network, a 5G NR network, an IoT network, or a 6G network), such that the wireless network may provide configuration of NCD-SSB(s) associated with the BWP for SDT to the UE. That is, for a UE when the BWP includes no CD-SSB, the configuration of NCD-SSB(s) is provided for the UE to initiate an SDT procedure on the BWP including the configured NCD-SSB(s). Accordingly, by applying the schemes of the present disclosure, the wireless network may be aware of the UE's capability regarding its support of using NCD-SSB(s) for SDT, allowing the wireless network to adaptively/flexibly configure the CD-SSB or NCD-SSB association in the BWP for SDT. As such, the UE may stay in the BWP to perform SDT using the configured NCD-SSB, without having to switch to another BWP with CD-SSB for DL synchronization and paging monitoring during SDT. In some implementations, the BWP may be a RedCap-specific BWP. The UE may be a RedCap UE or a non-RedCap UE.

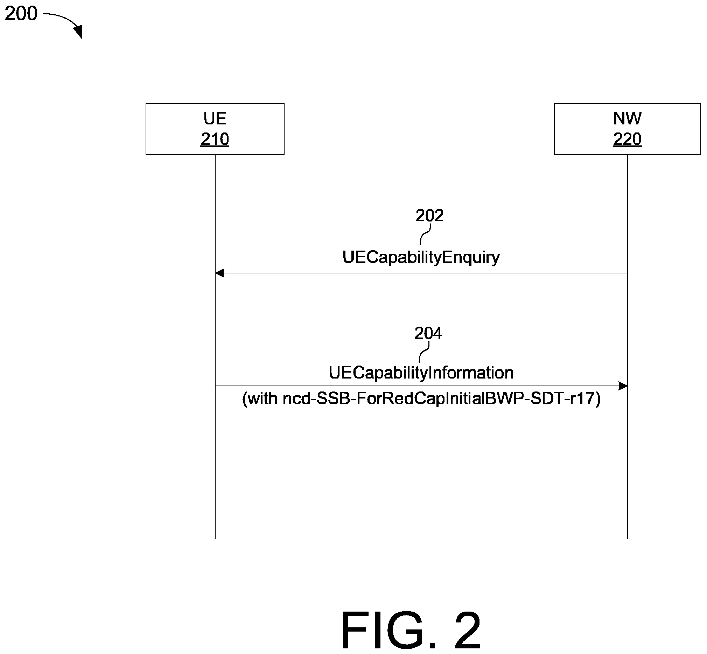

FIG. 2 illustrates an example scenario 200 of a UE capability transfer procedure in accordance with an implementation of the present disclosure. Scenario 200 involves a UE 210 (e.g., a RedCap UE or a non-RedCap UE) and a wireless network 220 (e.g., an LTE network, a 5G NR network, an IoT network, or a 6G network) which may include a BS (e.g., an evolved Node-B (eNB), a Next Generation Node-B (gNB), or a transmission/reception point (TRP)). As shown in FIG. 2, at 202, the wireless network 220 may initiate the UE capability transfer procedure by transmitting a UECapabilityEnquiry message to the UE 210. Specifically, the UE capability transfer procedure may be initiated when the UE 210 is in the RRC_CONNECTED state and when the wireless network 220 needs (additional) UE radio access capability information. At 204, the UE 210 may transmit a UECapabilitylnformation message to the wireless network 220. Specifically, the UECapabilitylnformation message may contain UE capability information indicating that the UE 210 supports using a BWP with a condition of SSB association for SDT. In particular, the condition of SSB association may indicate that the BWP is associated with no CD-SSB or is associated with NCD-SSB. For instance, the UE capability information may be signaled in an information element (IE) ncd-SSB-ForRedCaplnitiaIBWP-SDT-r17 which indicates that the UE 210 supports using the BWP associated with NCD-SSB for SDT. If such IE is absent in the UECapabilitylnformation message, the UE only supports SDT in a DL iBWP that includes the CD-SSB.

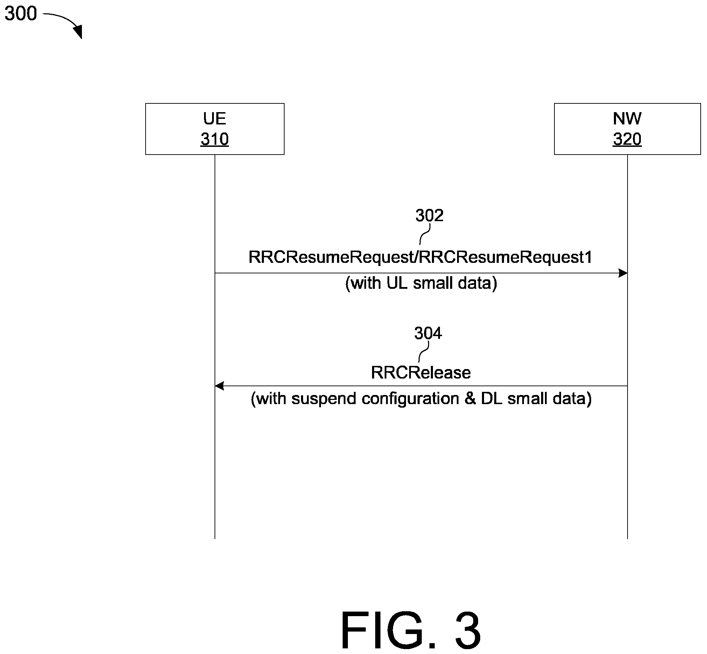

FIG. 3 illustrates an example scenario 300 of an SDT procedure in accordance with an implementation of the present disclosure. Scenario 300 involves a UE 310 (e.g., a RedCap UE or a non-RedCap UE) and a wireless network 320 (e.g., an LTE network, a 5G NR network, an IoT network, or a 6G network) which may include a BS (e.g., an eNB, a gNB, or a TRP). As shown in FIG. 3, at 302, the UE 310 may initiate the resume procedure for SDT, by transmitting an RRCResumeRequest or RRCResumeRequest1 message with UL small data. Specifically, the resume procedure may be initiated when the DL iBWP includes no CD-SSB and the NCD-SSB(s) associated with the BWP for SDT is configured. For instance, the NCD-SSB(s) associated with the BWP for SDT may be configured in the IE ncd-SSB-RedCapInitialBWP-SDT or BWP-DownlinkDedicatedSDT-r17 (e.g., in a previously received RRCRelease message). That is, the SDT procedure may be initiated on the DL iBWP according to configuration of NCD-SSB(s). In particular, the configuration of NCD-SSB(s) may be configured based on the UE capability information reported at 204 in FIG. 2. At 304, the wireless network 320 may transmit an RRCRelease message including DL small data (if any) to the UE 310. Specifically, the RRCRelease message may include the IE SuspendConfig with or without a configuration of NCD-SSB(s).

In some implementations, the initiating of the SDT procedure may be performed when the UE 310 is operating in an RRC inactive state (e.g., RRC_INACTIVE), an RRC idle state (e.g., RRC_IDLE) or an RRC connected state (e.g., RRC_CONNECTED).

In some implementations, the SDT procedure may be a random access (RA)-SDT procedure or a configured grant (CG)-SDT procedure.

In some implementations, the UE 310 may also maintain timing advance (TA) alignment and TA timer validation for the SDT procedure based on the NCD-SSB(s).

In some implementations, the UE 310 may also perform a reference signal received power (RSRP) measurement based on the NCD-SSB(s) to determine whether to perform the SDT procedure.

In some implementations, the UE 310 may also perform an RSRP measurement based on the NCD-SSB(s) to determine which SSB to select for RA-SDT and CG-SDT.

### Illustrative Implementations

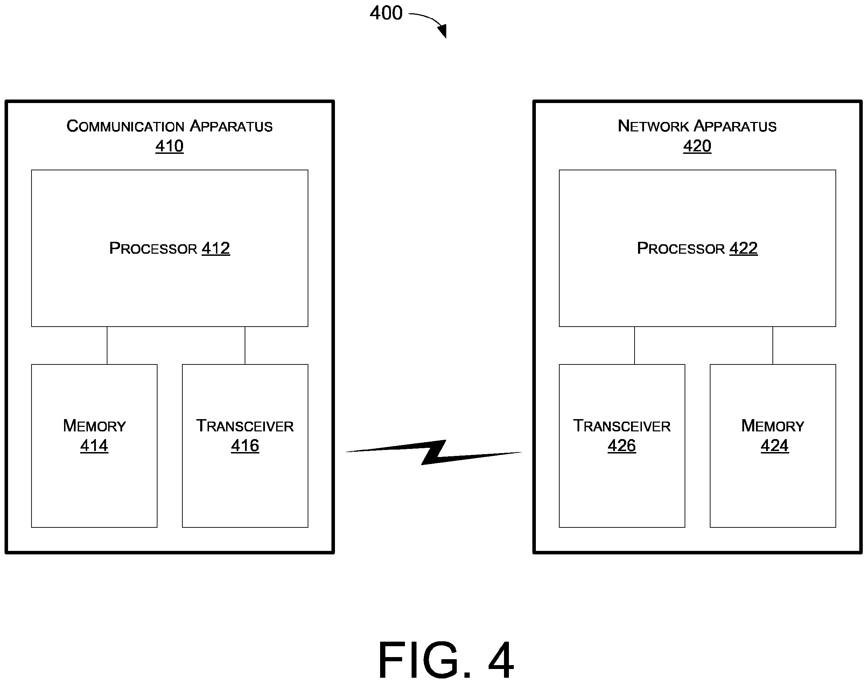

FIG. 4 illustrates an example communication system 400 having an example communication apparatus 410 and an example network apparatus 420 in accordance with an implementation of the present disclosure. Each of communication apparatus 410 and network apparatus 420 may perform various functions to implement schemes, techniques, processes and methods described herein pertaining to capability reporting to support SDT on a BWP with NCD-SSB for UE, including scenarios/schemes described above as well as processes 500 and 600 described below.

Communication apparatus 410 may be a part of an electronic apparatus, which may be a UE (e.g., a RedCap UE or a non-RedCap UE) such as a portable or mobile apparatus, a wearable apparatus, a wireless communication apparatus or a computing apparatus. For instance, communication apparatus 410 may be implemented in a smartphone, a smartwatch, a personal digital assistant, a digital camera, or a computing equipment such as a tablet computer, a laptop computer or a notebook computer. Communication apparatus 410 may also be a part of a machine type apparatus, which may be an IoT, NB-loT, or IIoT apparatus such as an immobile or a stationary apparatus, a home apparatus, a wire communication apparatus or a computing apparatus. For instance, communication apparatus 410 may be implemented in a smart thermostat, a smart fridge, a smart door lock, a wireless speaker or a home control center. Alternatively, communication apparatus 410 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. Communication apparatus 410 may include at least some of those components shown in FIG. 4 such as a processor 412, for example. Communication apparatus 410 may further include one or more other components not pertinent to the proposed scheme of the present disclosure (e.g., internal power supply, display device and/or user interface device), and, thus, such component(s) of communication apparatus 410 are neither shown in FIG. 4 nor described below in the interest of simplicity and brevity.

Network apparatus 420 may be a part of an electronic apparatus, which may be a network node such as a BS, a small cell, a router or a gateway. For instance, network apparatus 420 may be implemented in an eNodeB in an LTE, LTE-Advanced or LTE-Advanced Pro network or in a gNB/TRP in a 5G, NR, IoT, NB-loT or IIoT network. Alternatively, network apparatus 420 may be implemented in the form of one or more IC chips such as, for example and without limitation, one or more single-core processors, one or more multi-core processors, or one or more RISC or CISC processors. Network apparatus 420 may include at least some of those components shown in FIG. 4 such as a processor 422, for example. Network apparatus 420 may further include one or more other components not pertinent to the proposed scheme of the present disclosure (e.g., internal power supply, display device and/or user interface device), and, thus, such component(s) of network apparatus 420 are neither shown in FIG. 4 nor described below in the interest of simplicity and brevity.

In one aspect, each of processor 412 and processor 422 may be implemented in the form of one or more single-core processors, one or more multi-core processors, or one or more CISC processors. That is, even though a singular term "a processor" is used herein to refer to processor 412 and processor 422, each of processor 412 and processor 422 may include multiple processors in some implementations and a single processor in other implementations in accordance with the present disclosure. In another aspect, each of processor 412 and processor 422 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 412 and processor 422 is a special-purpose machine specifically designed, arranged and configured to perform specific tasks, including capability reporting to support SDT on a BWP with NCD-SSB for UE, in a device (e.g., as represented by communication apparatus 410) and a network (e.g., as represented by network apparatus 420) in accordance with various implementations of the present disclosure.

In some implementations, communication apparatus 410 may also include a transceiver 416 coupled to processor 412 and capable of wirelessly transmitting and receiving data. In some implementations, transceiver 416 may be capable of wirelessly communicating with different types of UEs and/or wireless networks of different radio access technologies (RATs). In some implementations, transceiver 416 may be equipped with a plurality of antenna ports (not shown) such as, for example, four antenna ports. That is, transceiver 416 may be equipped with multiple transmit antennas and multiple receive antennas for multiple-input multiple-output (MIMO) wireless communications. In some implementations, network apparatus 420 may also include a transceiver 426 coupled to processor 422. Transceiver 326 may include a transceiver capable of wirelessly transmitting and receiving data. In some implementations, transceiver 426 may be capable of wirelessly communicating with different types of UEs of different RATs. In some implementations, transceiver 426 may be equipped with a plurality of antenna ports (not shown) such as, for example, four antenna ports. That is, transceiver 426 may be equipped with multiple transmit antennas and multiple receive antennas for MIMO wireless communications.

In some implementations, communication apparatus 410 may further include a memory 414 coupled to processor 412 and capable of being accessed by processor 412 and storing data therein. In some implementations, network apparatus 420 may further include a memory 424 coupled to processor 422 and capable of being accessed by processor 422 and storing data therein. Each of memory 414 and memory 424 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 414 and memory 424 may include a type of read-only memory (ROM) such as mask ROM, programmable ROM (PROM), erasable programmable ROM (EPROM) and/or electrically erasable programmable ROM (EEPROM). Alternatively, or additionally, each of memory 414 and memory 424 may include a type of non-volatile random-access memory (NVRAM) such as flash memory, solid-state memory, ferroelectric RAM (FeRAM), magnetoresistive RAM (MRAM) and/or phase-change memory.

Each of communication apparatus 410 and network apparatus 420 may be a communication entity capable of communicating with each other using various proposed schemes in accordance with the present disclosure. For illustrative purposes and without limitation, a description of capabilities of communication apparatus 410, as a UE, and network apparatus 420, as a network node (e.g., BS), is provided below.

Under certain proposed schemes in accordance with the present disclosure with respect to capability reporting to support SDT on a BWP with NCD-SSB for UE, processor 412 of communication apparatus 410 may transmit, via transceiver 416, UE capability information to network apparatus 420. Specifically, the UE capability information indicates that communication apparatus 410 supports using a BWP with a condition of SSB association for SDT. Then, processor 412 may receive, via transceiver 416, a configuration (e.g., a configuration of one or more NCD-SSBs) associated with the BWP for SDT from network apparatus 420. Specifically, the configuration is configured based on the UE capability information. Also, processor 412 may initiate an SDT procedure on the BWP according to the configuration. Correspondingly, processor 422 of network apparatus 420 may receive, via transceiver 426, the UE capability information from communication apparatus 410. Specifically, the UE capability information indicates that communication apparatus 410 supports using a BWP with a condition of SSB association for SDT. Then, processor 422 may transmit, via transceiver 426, the configuration (e.g., a configuration of one or more NCD-SSBs) associated with the BWP for SDT to communication apparatus 410. Specifically, the configuration is configured based on the UE capability information. Also, processor 422 may perform an SDT procedure with communication apparatus 410 on the BWP. Specifically, the SDT procedure is initiated according to the configuration.

In some implementations, the condition of SSB association may indicate that the BWP is associated with CD-SSB or is associated with NCD-SSB. In some implementations, the configuration may include one or more NCD-SSBs associated with the BWP for SDT.

In some implementations, the receiving/transmitting of the configuration may be performed in an event that the BWP includes no CD-SSB. In some implementations, the BWP may be a RedCap-specific BWP.

In some implementations, the initiating of the SDT procedure may be performed in an event that communication apparatus 410 is operating in an RRC inactive state, an RRC idle state or an RRC connected state.

In some implementations, the SDT procedure may include an RA-SDT procedure or a CG-SDT procedure.

In some implementations, the configuration may be received/transmitted via an RRC Release message.

In some implementations, processor 412 may also perform at least one of the following operations: maintaining TA alignment and TA timer validation for the SDT procedure based on the NCD-SSBs; performing an RSRP measurement based on the NCD-SSBs to determine whether to perform the SDT procedure; and performing an RSRP measurement based on the NCD-SSBs to determine which SSB to select for RA-SDT and CG-SDT.

### Illustrative Processes

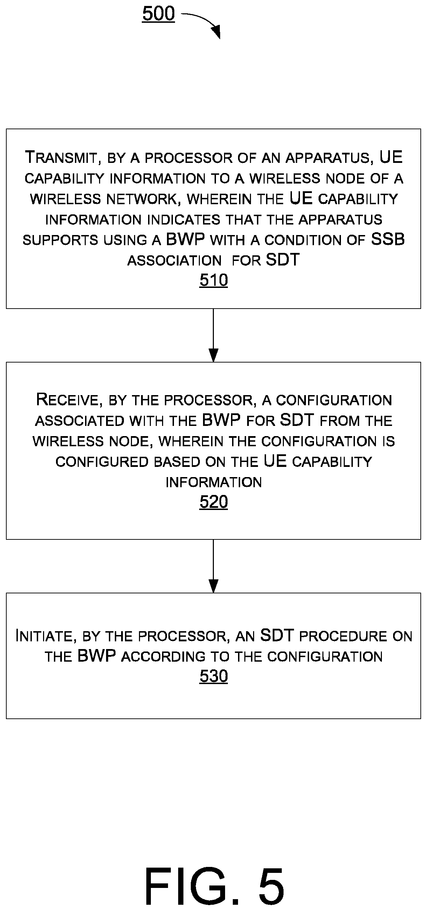

FIG. 5 illustrates an example process 500 in accordance with an implementation of the present disclosure. Process 500 may be an example implementation of above scenarios/schemes, whether partially or completely, with respect to capability reporting to support SDT on a BWP with NCD-SSB for UE. Process 500 may represent an aspect of implementation of features of communication apparatus 410. Process 500 may include one or more operations, actions, or functions as illustrated by one or more of blocks 510 to 530. Although illustrated as discrete blocks, various blocks of process 500 may be divided into additional blocks, combined into fewer blocks, or eliminated, depending on the desired implementation. Moreover, the blocks of process 500 may be executed in the order shown in FIG. 5 or, alternatively, in a different order. Process 500 may be implemented by or in communication apparatus 410 or any suitable UE or machine type devices. Solely for illustrative purposes and without limitation, process 500 is described below in the context of communication apparatus 410. Process 500 may begin at block 510.

At 510, process 500 may involve processor 412 of communication apparatus 410 transmitting, via transceiver 416, UE capability information to a wireless node (e.g., network apparatus 420) of a wireless network (e.g., wireless network 220/320). The UE capability information may indicate that communication apparatus 410 supports using a BWP with a condition of SSB association for SDT. Process 500 may proceed from 510 to 520.

At 520, process 500 may involve processor 412 receiving, via transceiver 416, a configuration associated with the BWP for SDT from the wireless node. The configuration may be configured based on the UE capability information. Process 500 may proceed from 520 to 530.

At 530, process 500 may involve processor 412 initiating an SDT procedure on the BWP according to the configuration.

In some implementations, the condition of SSB association may indicate that the BWP is associated with no CD-SSB or is associated with NCD-SSB. In some implementations, the configuration may include one or more NCD-SSBs associated with the BWP for SDT.

In some implementations, the receiving of the configuration may be performed in an event that the BWP comprises no CD-SSB. In some implementations, the BWP may be a RedCap-specific BWP.

In some implementations, the initiating of the SDT procedure may be performed in an event that communication apparatus 410 is operating in an RRC inactive state, an RRC idle state or an RRC connected state.

In some implementations, the SDT procedure may include an RA-SDT procedure or a CG-SDT procedure.

In some implementations, the configuration may be received via an RRC signaling. Additionally, or optionally, the RRC signaling may be UE-specific. For instance, the configuration may be received via an RRC Release message.

In some implementations, process 500 may further involve processor 412 performing at least one of the following operations: maintaining TA alignment and TA timer validation for the SDT procedure based on the NCD-SSBs; performing an RSRP measurement based on the NCD-SSBs to determine whether to perform the SDT procedure; and performing an RSRP measurement based on the NCD-SSBs to determine which SSB to select for RA-SDT and CG-SDT.

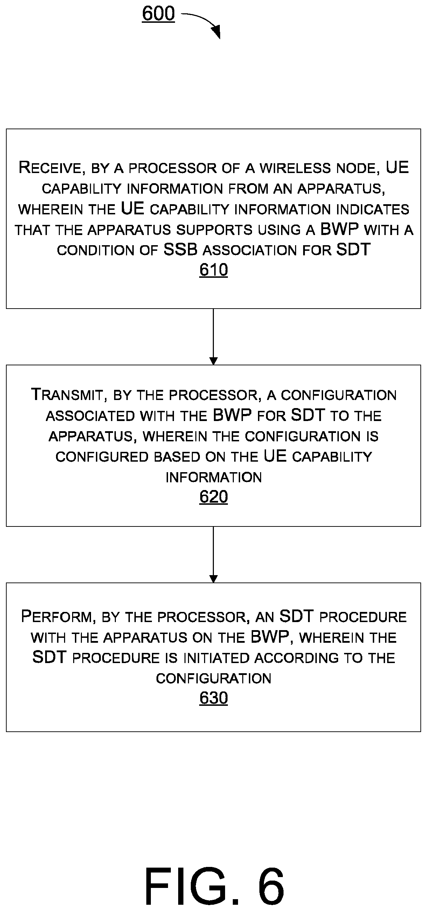

FIG. 6 illustrates an example process 600 in accordance with an implementation of the present disclosure. Process 600 may be an example implementation of above scenarios/schemes, whether partially or completely, with respect to capability reporting to support SDT on a BWP with NCD-SSB for UE. Process 600 may represent an aspect of implementation of features of network apparatus 420. Process 600 may include one or more operations, actions, or functions as illustrated by one or more of blocks 610 to 630. Although illustrated as discrete blocks, various blocks of process 600 may be divided into additional blocks, combined into fewer blocks, or eliminated, depending on the desired implementation. Moreover, the blocks of process 600 may be executed in the order shown in FIG. 6 or, alternatively, in a different order. Process 600 may be implemented by or in network apparatus 420 as well as any variations thereof. Solely for illustrative purposes and without limitation, process 600 is described below in the context of network apparatus 420. Process 600 may begin at block 610.

At 610, process 600 may involve processor 422 of network apparatus 420 receiving, via transceiver 426, UE capability information from an apparatus (e.g., communication apparatus 410). The UE capability information may indicate that the apparatus supports using a BWP with a condition of SSB association for SDT. Process 600 may proceed from 610 to 620.

At 620, process 600 may involve processor 422 transmitting, via transceiver 426, a configuration associated with the BWP for SDT to the apparatus. The configuration may be configured based on the UE capability information. Process 600 may proceed from 620 to 630.

At 630, process 600 may involve processor 422 performing an SDT procedure with the apparatus on the BWP. The SDT procedure may be initiated according to the configuration.

In some implementations, the condition of SSB association may indicate that the BWP is associated with no CD-SSB or is associated with NCD-SSB. In some implementations, the configuration may include one or more NCD-SSBs associated with the BWP for SDT.

In some implementations, the transmitting of the configuration may be performed in an event that the BWP includes no CD-SSB. In some implementations, the BWP may be a RedCap-specific BWP.

In some implementations, the SDT procedure may be initiated in an event that the apparatus is operating in an RRC inactive state, an RRC idle state or an RRC connected state.

In some implementations, the SDT procedure may include an RA-SDT procedure or a CG-SDT procedure.

In some implementations, the configuration may be transmitted via an RRC signaling. Additionally, or optionally, the RRC signaling may be UE-specific. For instance, the configuration may be received via an RRC Release message.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method (500), comprising:
transmitting, by a processor (412) of an apparatus (410), UE capability information to a wireless node (420) of a wireless network, wherein the UE capability information indicates that the apparatus supports using a bandwidth part, BWP, with a condition of synchronization signal block, SSB, association for small data transmission, SDT;
receiving, by the processor (412), a configuration associated with the BWP for SDT from the wireless node, wherein the configuration is configured based on the UE capability information; and
initiating, by the processor (412), an SDT procedure on the BWP according to the configuration.

2. The method (500) of Claim 1, wherein the condition of SSB association indicates that the BWP is associated with no cell-defining SSB, CD-SSB, or is associated with NCD-SSB, or wherein the configuration includes one or more non-cell-defining SSBs, NCD-SSBs, associated with the BWP for SDT.

3. The method (500) of Claim 1, wherein the receiving of the configuration is performed in an event that the BWP comprises no CD-SSB, or wherein the BWP is a RedCap-specific BWP.

4. The method (500) of Claim 1, wherein the initiating of the SDT procedure is performed in an event that the apparatus is operating in a radio resource control, RRC, inactive state, an RRC idle state or an RRC connected state.

5. The method (500) of Claim 1, wherein the SDT procedure comprises a random access, RA,-SDT procedure or a configured grant, CG,-SDT procedure.

6. The method (500) of Claim 1, wherein the configuration is received via an RRC Release message.

7. The method (500) of Claim 1, further comprising at least one of the following:
maintaining, by the processor (412), timing advance, TA, alignment and TA timer validation for the SDT procedure based on the NCD-SSBs;
performing, by the processor (412), a reference signal received power, RSRP, measurement based on the NCD-SSBs to determine whether to perform the SDT procedure; and
performing, by the processor (412), an RSRP measurement based on the NCD-SSBs to determine which SSB to select for RA-SDT and CG-SDT.

8. An apparatus (410), comprising:
a transceiver (416) which, during operation, wirelessly communicates with a network node (420) of a wireless network; and
a processor (412) communicatively coupled to the transceiver (416) such that, during operation, the processor performs operations comprising:
transmitting, via the transceiver (416), UE capability information to the wireless node (420), wherein the UE capability information indicates that the apparatus supports using a bandwidth part, BWP, with a condition of synchronization signal block, SSB, association for small data transmission, SDT;
receiving, via the transceiver (416), a configuration associated with the BWP for SDT from the wireless node (420), wherein the configuration is configured based on the UE capability information; and
initiating an SDT procedure on the BWP according to the configuration.

9. The apparatus (410) of Claim 8, wherein the condition of SSB association indicates that the BWP is associated with no cell-defining SSB, CD-SSB, or is associated with NCD-SSB, or wherein the configuration includes one or more non-cell-defining SSBs, NCD-SSBs, associated with the BWP for SDT.

10. The apparatus (410) of Claim 8, wherein the receiving of the configuration is performed in an event that the BWP comprises no CD-SSB, or wherein the BWP is a RedCap-specific BWP.

11. The apparatus (410) of Claim 8, wherein the initiating of the SDT procedure is performed in an event that the apparatus is operating in a radio resource control, RRC, inactive state, an RRC idle state or an RRC connected state.

12. The apparatus (410) of Claim 8, wherein the SDT procedure comprises a random access, RA,-SDT procedure or a configured grant, CG,-SDT procedure.

13. The apparatus (410) of Claim 8, wherein the configuration is received via an RRC Release message.

14. The apparatus (410) of Claim 8, wherein, during operation, the processor (412) further performs operations comprising at least one of the following:
maintaining timing advance, TA, alignment and TA timer validation for the SDT procedure based on the NCD-SSBs;
performing, via the transceiver (416), a reference signal received power, RSRP, measurement based on the NCD-SSBs to determine whether to perform the SDT procedure; and
performing, via the transceiver (416), an RSRP measurement based on the NCD-SSBs to determine which SSB to select for RA-SDT and CG-SDT.

15. A method (600), comprising:
receiving (610), by a processor (422) of a wireless node (420), UE capability information from an apparatus (410), wherein the UE capability information indicates that the apparatus (410) supports using a bandwidth part, BWP, with a condition of synchronization signal block, SSB, association for small data transmission, SDT;
transmitting (620), by the processor (422), a configuration associated with the BWP for SDT to the apparatus, wherein the configuration is configured based on the UE capability information; and
performing (630), by the processor (422), an SDT procedure with the apparatus (410) on the BWP, wherein the SDT procedure is initiated according to the configuration.
